Europäisches Patentamt

**European Patent Office**

**Office européen des brevets**

(19)

(11) Publication number: **0 018 269**
A2

# EUROPEAN PATENT APPLICATION

(12)

(21) Application number: 80400466.1

(22) Date of filing: 09.04.80

(51) Int. Cl.³: **G 03 H 3/00**

(30) Priority: 18.04.79 US 30972

(43) Date of publication of application: 29.10.80 Bulletin 80/22

(84) Designated Contracting States: **DE FR GB**

(71) Applicant: **EASTMAN KODAK COMPANY, 343 State Street, Rochester, New York 14650 (US)**

(72) Inventor: **Rosenfeld, Robert Bernard, Kodak Park, Rochester New York 14650 (US)**

(74) Representative: **Mestre, Jean et al, KODAK-PATHE 30, rue des Vignerons, F-94300 Vincennes (FR)**

(54) **Ultrasonographic exposure apparatus.**

(57) An ultrasound transducer (106) is positioned in a reservoir (102, 114, 114a, 116) for a transport liquid (104, 118) so that the transducer (106) is immersed in a transport liquid (104) within the reservoir (102). An ultrasonographic element (124) is positioned in contact with the transport liquid (118), and a damper (122) is located in contact with the transport liquid (118) adjacent the ultrasonographic element (124) remote from the ultrasound transducer (106).

ULTRASONOGRAPHIC EXPOSURE APPARATUS

This invention is directed to ultrasonographic exposure apparatus. More specifically, this invention is directed to ultrasonographic exposure apparatus that are useful as sonographic cameras and sonographic sensitometers.

The terms "ultrasonic radiation" and "ultrasound" are employed interchangeably in this specification to designate pressure-rarefaction waves differing from sound waves in exhibiting higher frequencies and shorter wavelengths. The term "ultrasonographic exposure" is employed to designate exposure to ultrasonic radiation. The production of visible images by means of ultrasonic radiation is referred to in the art as "ultrasonoscopy". The production of a visible record by means of ultrasonic radiation is referred to as "ultrasonography". The instruments for producing ultrasonoscopic images are designated "ultrasonoscopes", and the ultrasonoscopes which produce ultrasonographic images are referred to as "sonographic cameras". Elements which form visible images of ultrasonic radiation patterns as a result of being ultrasonically exposed in a sonographic camera are referred to as "ultrasonographic elements". Instruments which are capable of permitting ultrasonographic elements to be concurrently exposed in different areas to different intensities of ultrasound are referred to as "sonographic sensitometers".

The definitions of terms as here presented are consistent with the uses of these terms in the art. Most of these terms are suggested by P. J. Ernst in the Journal of the Accoustical Society of America, Vol. 22, No. 1, in an article entitled "Ultrasonography", pp. 80-83, January 1951.

Belgian Patent 864,089 discloses a process for imagewise ultrasonographic exposing a silver halide photographic element. One form this process calls for immersing a silver halide photographic element in a transport liquid, such as a polar solvent, preferably water or an aqueous solution, and imagewise ultrasonographic exposing the element to ultrasound while in the transport liquid. Either during or after ultrasound exposure the photographic element is exposed to light. The element is then photographically processed in a conventional way, and an ultrasonographic image is produced for viewing. Since the photographic element forms an ultrasonographic image, it is by definition an ultrasonographic element. It is preferred to allow ultrasonographic elements a brief period of contact with the transport liquid prior to ultrasonographic exposure, and in some forms it is preferred to delay light exposure for a few seconds following ultrasonographic exposure.

In forming ultrasonographic images as described in Belgian Patent 864,089, ultrasound which has passed through the ultrasonographic element being exposed can be reflected back to the element and results in nonuniformities in background areas and/or in loss of image definition. Further, the ultrasonographic elements are very susceptible to image degradation when an interval exists between ultrasonographic exposure and formation of a developable latent image. During the interval between sound and light exposures, for example, care must be exercised to avoid disturbances in the transport liquid. Still further, the composition of the transport liquid can vary in the course of sequential imaging due to diffusion into or out of the ultrasonographic elements.

This invention is directed to an ultrasonographic exposure apparatus comprising at least a reservoir for at least an ultrasonic transport liquid, an ultrasound generator positioned to be immersed in the liquid and means for supporting an ultrasonographic element within the liquid. This apparatus is characterized in that a damper is positioned adjacent a surface of that element remote from the generator and in contact with the liquid within the reservoir.

The ultrasonographic exposure apparatus of this invention is capable of protecting an ultrasonographic element from nonuniformities and image degradation. This apparatus can reduce reflection of ultrasound which produces nonuniformities and degrades image definition. Additionally this apparatus can in one form protect the transport liquid adjacent the ultrasonographic element during exposure from image degrading disturbances. Further, this apparatus can facilitate more efficient control of the transport liquid composition. In a preferred form this invention is directed to an ultrasonographic exposure apparatus which substantially eliminates background nonuniformities and protects the ultrasonographic element from image degradation attributable to ultrasound reflections, transport liquid disturbances and variations in transport liquid composition.

Figure 1 is a sectional view of a sonographic sensitometer according to this invention; and

Figure 2 is a schematic sectional view of a sonographic camera.

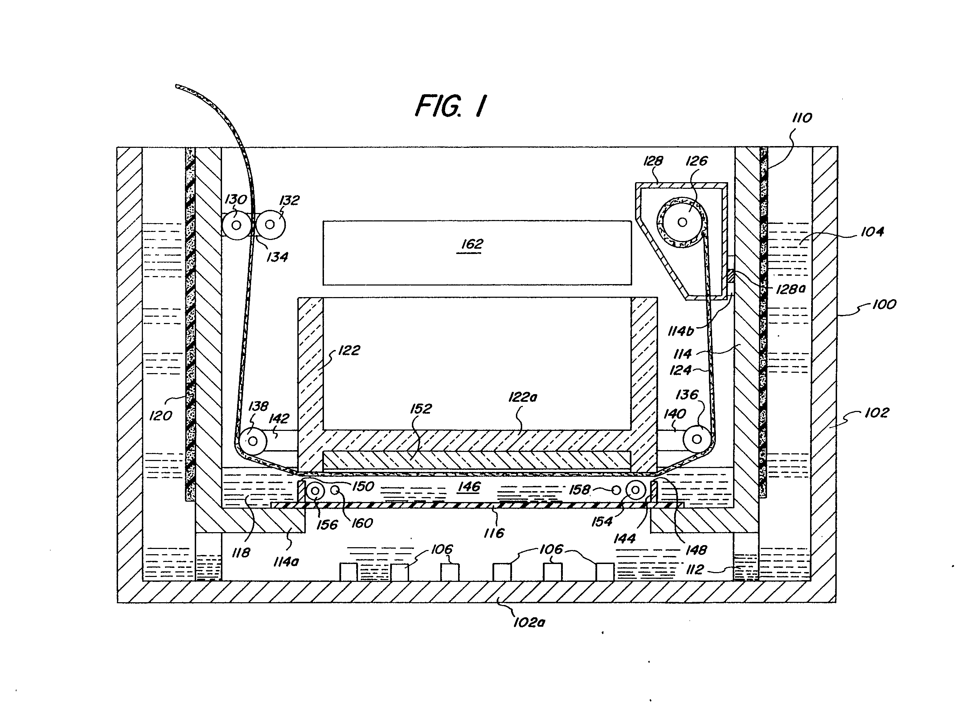

In Figure 1, a preferred ultrasonographic exposure apparatus 100 according to the invention is illustrated. A first outer reservoir 102 confines a first transport liquid 104. Adjacent the bottom wall 102a of the outer reservoir 102 is positioned an ultrasound generator 106 for example an array of transducers. The ultrasound transducers 106 can be of conventional construction and, by suitable connections to energy sources, not shown, can be made to emit continuous, modulated or pulsed ultrasonic radiation into the first transport liquid 104 at selected intensities and frequencies. In a preferred form, the transducers 106 are supplied with energy in a stepped relationship so that each transducer radiates ultrasonic energy at a predetermined multiple or fraction of that emitted by a next adjacent transducer. In this way, the transducers 106 collectively form an array of ultrasonic radiation emitters which vary in a predetermined manner in their intensity of emission.

Located within the outer reservoir 102 is an ultrasound reception unit 110. The unit 110 is positioned by supports 112 in a fixed spatial relationship to the outer reservoir 102 and the ultrasound transducers 106. The ultrasound reception unit 110 includes rigid barrier walls 114 which turn inwardly at their lower edges to form an integral flange 114a. The flange 114a on barrier walls 114, together with a transmissive means like a flexible membrane 116 sealed to the upper surface of the flange 114a, form a / inner reservoir for a second second transport liquid 118. The barrier walls 114 are provided with an outer covering 120 of a sound-absorbing material. The flexible membrane 116 is formed of a liquid-impermeable, ultrasonically transmissive material.

A damper 122 is positioned in contact with the second transport liquid 118. Ultrasonographic element 124 to be ultrasonically exposed is interposed between the second reservoir 114, 114a, 116 and the damper 122 in contact with the second transport liquid 118. The ultrasonographic element 124 is pulled from a supply spool 126 rotatably mounted in a light-tight box 128 by a pair of drive rolls 130 and 132 rotatably attached to the second reservoir (114, 114a, 116) by mounting bracket 134. The light-tight box 128 includes a lug 128A which cooperates with a bayonet slot 114B on the inner surface of the adjacent barrier wall to mount the box 128 removably in position. Identical guide rolls 136 and 138 are rotatably attached to the damper 122 by mounting brackets 140 and 142, respectively. One or both of the drive rolls 130 and 132 can be driven by a motor or other drive mechanism, not shown, while the supply spool 126 can be constructed to provide enough frictional drag for the ultrasonographic element 124 to remain taut. Thus, drive rolls 130, 132, 136 and 138 serve as a means for transporting the ultrasonographic element 124 into and out of position for ultrasonographic exposure. In one preferred form, the ultrasonographic element can be provided along one or both edges with perforations to permit sprocket feed of the element.

A peripheral skirt 144 supports the damper 122 in fixed spatial relation with the second reservoir 114, 114a and 116. The skirt 144, together with the bottom walls of the damper 122 and the second reservoir 114, 114a, 116, form an exposure chamber 146 for the ultrasonographic element 124. The skirt 144 is provided with guide slots 148 and 150 to permit the ultrasonographic element 124 to be drawn through the exposure chamber. Within the exposure chamber 146, the damper 122 includes an ultrasound absorptive means in the form of a layer 152 in contact with its bottom wall 122a. To seal the exposure chamber 146 adjacent to the guide slots 148 and 150, pressure-expansible bladders 154 and 156 are provided connected to fluid conduits, not shown, extending through the skirt 144. To permit selective circulation of the transport liquid 118 within the exposure chamber 146, ports 158 and 160 are provided, which can be connected through the skirt 144 to liquid conduits, not shown. At least the bottom wall 122a and the ultrasound absorptive layer 152 of the damper 122 are capable of transmitting light when the ultrasonographic element 124 is of a type which requires light exposure. They can be translucent, but are preferably transparent. An exposing means for/a example light source 162 is positioned above the damper 122. The ultrasonographic element 124 is supported within the transport liquid 118 by bladders 154 and 156 in cooperation with the transporting means (guide rolls 136 and 138, as well as by drive rolls 130 and 132) which form supporting means.

The ultrasonographic exposure apparatus 100 can be used as a sonographic sensitometer to prepare an ultrasonographic characteristic curve for an ultrasonographic element. An ultrasonographic characteristic curve is a plot of intensity of ultrasonographic exposure versus density in ultrasonically exposed areas. Such a sensitometer permits exposure of the ultrasonographic element to a number of different ultrasonic intensity levels in a single process step.

Where the base of the ultrasonographic element being employed in the sensitometer does not appreciably absorb ultrasonic energy, the ultrasound-responsive layer or layers of the element can be positioned on the surface of the base nearest or farthest from the ultrasound transducers. It is preferred that the ultrasound-responsive surface of the ultrasonographic elements 124 be positioned nearest the ultrasound transducers 106.

The advantages of the ultrasonographic exposure apparatus 100 can be illustrated by describing its use with reference to the ultrasonographic element 124 in the form of an ultrasonographic film having a single ultrasound-responsive layer coated on a single surface thereof. Where the ultrasonographic element 124 is also light-responsive, the entire procedure until processing is completed, except for the light exposure step, if any, is conducted in the dark.

The first transport liquid 104 of any convenient composition is introduced into the outer reservoir 102. The ultrasound reception unit 110 is next prepared for use by introducing a second transport liquid 118 into the inner reservoir 114, 114a, 116. The ultrasonographic element 124 with an ultrasound-responsive layer on the surface remote from the damper 122 is fed from the supply spool 126, over the guide roll 136, through the guide slots 148 and 150, over the guide roll 138 and between the drive rolls 130 and 132.

The drive rolls 130 and 132 are activated to bring a length of the ultrasonographic element 124 not previously in contact with the second transport liquid 118 into the exposure chamber 146. The expansible bladders 154 and 156 are then inflated to seal the exposure chamber 146. The bladders 154 and 156 press against the ultrasonographic element 124, causing it to lie against the surface of the ultrasound absorptive layer 152. This fixes the element 124 securely in the desired plane for ultrasonographic exposure. The element 124 can be allowed to remain in contact with the second transport liquid 118 in the exposure chamber for a short period prior to exposure, or the element 124 can be imagewise ultrasonographically exposed without delay after being positioned as described within the exposure chamber.

During ultrasonographic exposure, the ultrasound transducers 106 each transmit ultrasonic energy into the first transport liquid 104, through the ultrasonically transmissive membrane 116 forming the bottom wall of the second reservoir 114, 114a, 116, through the second transport liquid 118 in the exposure chamber 146 and to the ultrasound-responsive layer of the ultrasonographic element 124. Each transducer 106 emits ultrasound at a different level of intensity, and ultrasound is received at different intensity levels in differing areas of the ultrasonographic element 124. Light exposure of the ultrasonographic element 124 can occur during or after ultrasonographic exposure. Light travels from the light source 162 through the bottom wall 122a of the damper 122 and the ultrasound-absorptive layer 152.

During ultrasonographic exposure, it is desired to expose the ultrasonographic element to ultrasound transmitted from the transducers 106 through the transport liquid 104, the membrane 116 and the second transport liquid 118 in the exposure chamber 146 while protecting the element from exposure by ultrasound which has passed through the element 124 and then been reflected back. The damper 122 protects the ultra-sonographic element from such reflected ultrasonic energy. If the ultrasonographic element 124 is clamped into the position shown in Figure 1 for exposure, but with the damper unit omitted, the second transport liquid 118 forms an interface with air behind the ultrasonographic element 124. That is, the ultrasonographic element 124 is interposed in the second transport liquid 118 between the air-liquid interface and the ultrasound transducers 106. Ultrasound passing through the ultrasonographic element 124 causes a wave pattern to form at the surface of the second transport liquid 118 behind the element 124. Ultrasonic energy reflected back from the air-liquid interface bearing the wave pattern produces background nonuniformities in the ultrasonographic pattern produced in the ultrasonographic element 124. With the damper 122 interposed between the second transport liquid 118 and ambient air, a wave pattern is prevented from forming behind the ultrasonographic element 124 during ultrasonographic exposure. This greatly enhances the definition of the transmitted ultrasound pattern by the ultrasonographic element 124.

The ultrasound absorptive layer 152, though not necessary to avoid wave formation, offers further protection against ultrasound reflection from the bottom wall 122a of the damper 122. The ultrasound-absorptive layer 152 is analogous to a photographic antihalation layer. This layer can, in fact, be located on the surface of the ultrasonographic element 124 remote from the ultrasound transducers 106 and actually form a part of the ultrasonographic element 124 being exposed. However, the ultrasound-absorptive layer 152, though advantageous, is not an essential feature in either the apparatus or the ultrasonographic element 124.

Where the ultrasonographic element 124 is a silver halide photographic element, the ultrasonographic exposure of the ultrasonographic element 124 is preferably at an intensity below that required to form a latent image in the silver halide emulsion layer. The ultrasonographic exposure merely alters the sensitivity of the silver halide emulsion layer to light exposure. After ultrasonographic exposure has occurred and before light exposure has formed a latent image in the photographic element, image definition can be degraded by even small disturbances in the transport liquid in contact with the photographic element. Disturbance of the second transport liquid 118 is greatly reduced by its restriction within the exposure chamber 146. To protect the exposure chamber 146 further from disturbances, the first reservoir 102 acts as a shock absorber. In actual use, it has been shown that a shock or blow delivered to the first container 104 is ——————————— entirely dissipated in the first transport liquid 104 even when the outer covering 120 is omitted. The outer covering 120, however, provides additional protection. Once the developable latent image is formed in the silver halide emulsion layer of the ultra-sonographic element 124, the element 124 can be thereafter handled in accordance with conventional photographic processing techniques, and is not susceptible to degradation or obliteration under ordinary conditions of handling.

Depending upon the specific choices of transport liquid 118 and ultrasonographic element 124 diffusion of a sensitivity altering material can occur in the exposure chamber 146 from the ultrasound-responsive layer of the ultrasonographic element 124 into a polar solvent forming the second transport liquid 118 or from the polar solvent into the ultrasound-responsive layer. Diffusion into or out of the ultrasonographic element 124 occurs at least during ultrasonographic exposure and may occur also before and/or after ultrasonographic exposure. In any case, the composition of the polar solvent within the exposure chamber 146 is at least slightly altered as a result of this diffusion. Changes in the composition of the second transport liquid reservoir 114, 114a, 116 can lead to variations in the ultrasonographic exposure patterns being produced.

Before the expansible bladders 154 and 156 are deflated to permit the ultrasonographic element 124 to be drawn from the exposure chamber 146

-11-

the polar solvent in the exposure chamber 146 is displaced by fresh polar solvent using the ports 158 and 160. Because of the relatively restricted volume of the exposure chamber 146, this can be accomplished very quickly. The small amount of liquid withdrawn from the exposure chamber 146 can either be processed to its original composition and returned to the second transport liquid 118 or discarded.

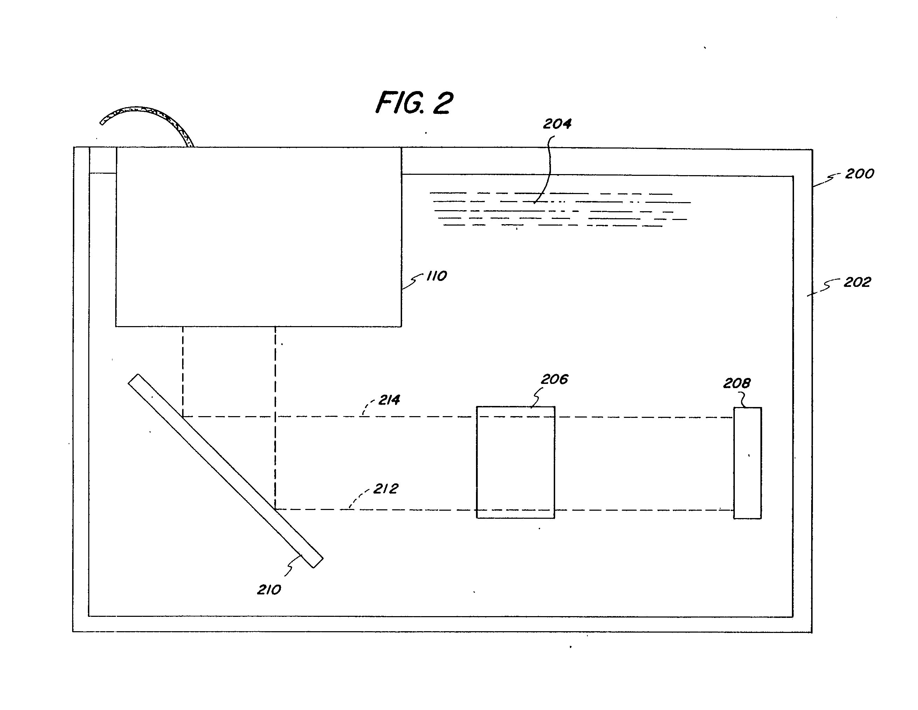

In Figure 2, a sonographic camera 200 is shown. The camera 200 includes a reservoir 202 confining a transport liquid 204 which can be identical to the first transport liquid 104. Contained within the reservoir 202 is an object 206 intended to modulate or imagewise configure ultrasonic energy emanating from ultrasound transducer 208. The object 206 is the subject and not itself a part of the sonographic camera. An ultrasonic mirror 210 (such as a polished metal plate) is positioned in the reservoir 202. Dashed lines 212 and 214 schematically illustrate ultrasound propagation paths. The ultrasonic mirror 210 is positioned to reflect ultrasound so that it impinges upon the ultrasound reception unit 110. The ultrasound reception unit 110 is operated identically as in the ultrasonographic exposure apparatus 100, described above.

The structure of the specific embodiments described above can be varied. For example, when the ultrasound transducers 106 are positioned in the exposure chamber 146, it is apparent that the outer reservoir 102 and the first transport liquid 104 can be eliminated. In another form of the invention, the second reservoir is omitted. The first and second transport liquids in this form are merged, and no separate exposure chamber exists. In this latter form of the invention, the damper 122 remains in place and continues to protect the ultrasonographic element 124 from reflected ultrasonic energy and to prevent a wave pattern from forming at the surface of the transport liquid 118 behind the ultrasonographic element 124.

The ultrasound reception unit 110, when present in the sonographic camera 200, is subject to similar modifications as those described above, although the ultrasound transducers 208 generally would not be located in the reception unit 110. The use of an ultrasonic mirror 210 in the sonographic camera 200 is not required. The object 206 and ultrasound transducer 208 can be relocated so that no reflection of ultrasound is required to impinge ultrasound on the reception unit 110. For example, the ultrasound reception unit 110 can be positioned to intercept ultrasound which is reflected rather than transmitted by the object. Although a comparatively simple sonographic camera configuration has been illustrated in Figure 2, it is appreciated that sonographic camera configurations can be employed using a variety of ultrasonic mirror and ultrasonic lens arrangements heretofore known for use in sonographic cameras and ultrasonoscopes.

The light source 162 can be integrated with the damper 122 so that a single unit performs both functions. It is also possible to reposition the light source 162 so that the ultrasonographic element 124 is both ultrasonically and light-exposed from the same side. In still another form of the invention, the light source 162 need not form a part of the apparatus at all. Its function can be performed by a separate light source, or ambient light can be relied upon for latent image formation. Further, certain ultrasonographic elements useful with this apparatus require no light exposure for ultrasonographic imaging.

Although the apparatus has been described by reference specifically to light exposure, it is appreciated that electromagnetic radiation of a wavelength longer/than that of the visible spectrum can be used, including infrared, ultraviolet and x-ray radiation, depending upon the spectral response of ultrasonographic element.

Although apparatus of Figures 1 and 2 are shown in a form particularly adapted to feed an ultrasonographic film, it is appreciated that this apparatus can be adapted to the exposure of elements in the form of discrete sheets or strips. The drive rolls 130 and 132, in addition to advancing the ultrasonographic element 124, can be used to laminate a receiver layer to the ultrasonographic element 124 to produce a transferred image. For example, when the ultrasonographic element 124 is a silver halide photographic element, the receiver layer can contain a developing agent and an alkali which are activated by a polar solvent ingested in the photographic element 124 during transport through the exposure chamber 146. Photographic processing then begins immediately upon laminating the receiver to the ultrasonographic element. Alternatively, the alkali can be incorporated in the polar solvent in the second transport liquid 118, which then becomes an activator bath. In still another form, the second transport liquid 118 can be a photographic developer bath. Other variations will readily occur to those of ordinary skill in the art in view of this disclosure.

The materials and processes for ultrasonographic imaging disclosed in Belgian Patent 864,089 can be used with the exposure apparatus of the invention.

When ultrasonographic silver halide elements comprising internally fogged silver halide grains are used, in the apparatus of the invention, such elements can be photographically developed after ultrasonographic exposure in a transport liquid in the presence of a diffusible solute such as iodide ions or a silver halide solvent. The solute renders the silver halide grains developable in conventional surface developers.

Ultrasonographic silver halide elements comprising a catalyst layer containing such catalysts as Group IB and Group VIII metals or their sulfides or selenides can be used in the apparatus of the invention. Ultrasonographic exposure can be carried out while the catalyst-containing ultrasonographic element is in contact with a transport liquid containing a catalyst poison such as halide ions or mercaptans. Light exposure is not required for imaging with such elements.

To further illustrate this invention and its use, the ultrasonographic element 124 to be exposed is a silver halide photographic element consisting of a silver bromide emulsion layer coated on a poly (ethylene terephthalate) film base. The emulsion layer contains cubic silver bromide grains of 0.2 micron mean width, gelatin and a 1,1'-diethyl-6, 6'-dinitrothiacyanine in a concentration of 1.25 x $10^{-4}$ mole per mole of silver. The emulsion layer is adjusted to a pAg of 6.0 with bromide ions by conventional techniques to desensitize the emulsion layer to light prior to ultrasonographic exposure. The transport liquid 104 and 118 both contain distilled water. The light source 162 takes the form of an array of 132 tungsten lamps ———— of one and one-half watt each equally spaced on a polished metal reflecting surface contained within a housing 10 by 40 cm on an edge. Six ultrasound transducers 106 are employed in the sonographic sensitometer capable of yielding a power output at the plane of the ultrasonographic element of 35, 8.7, 2.2, 1.0, 0.33 and 0.125 watts/cm$^2$, respectively. The ultrasonographic element is immersed in the transport liquid 118 in the exposure chamber 146 for 10 seconds before ultrasono/ exposure graphic and then imagewise exposed to pulsed ultrasound from the transducers 106 (pulse width 10$^{-6}$ second, pulse period 10$^{-4}$ second and total number of pulses 10$^5$) and then immediately exposed to light from the light source 162 for 8 seconds. The ultrasonographic element 124 is removed from the ultrasonographic exposure apparatus, developed in Kodak Developer D-19, fixed in hypo, washed and dried to produce an array of dark silver areas on a light background, which reflect differences in the intensity levels of the ultrasound transducers. The maximum density levels produced in / ultra- sonographically exposed areas is then plotted as a function of ultrasonographic exposure intensity to produce an ultrasonographic characteristic curve. This can be used to identify the optimum ultrasonic power level required at the film plane for ultrasonographic imaging. The ultrasound reception unit can also be identically used in the sonographic camera 200 for producing an ultrasonographic image of an object.

0018269

CLAIMS

1. An ultrasonographic exposure apparatus comprising

(a) at least a reservoir for at least an ultrasonic transport liquid,

(b) an ultrasound generator positioned to be immersed in said transport liquid and

(c) means for supporting an ultrasonographic element within said transport liquid, characterized in that a damper is positioned adjacent a surface of said ultrasonographic element remote from said ultrasound generator and in contact with said transport liquid within said reservoir.

2. An ultrasonographic exposure apparatus according to claim 1 additionally including means interposed between said damper and said ultrasonographic element for absorbing ultrasound.

3. An ultrasonographic exposure apparatus according to claim 1 or 2 characterized by the fact that it comprises a first outer reservoir for a first transport liquid,

an ultrasound reception unit positioned in contact with said first transport liquid to receive ultrasound from said generator immersed in said first transport liquid,

means forming a second inner reservoir for a second transport liquid including ultrasonically transmissive means forming at least one wall portion of said inner reservoir,

means cooperating with said inner reservoir and said damper to form an exposure chamber within said second transport liquid,

said damper being positioned to form an interface with the second transport liquid adjacent a surface of said ultrasonographic element remote from said transmissive means,

0018269

and that the supporting means are located to place said ultrasonographic element within said inner reservoir adjacent said ultrasonically transmissive means

4. An ultrasonographic exposure apparatus according to any one of claims 1 to 3 additionally including means for exposing said ultrasonographic element to electromagnetic radiation.

5. An ultrasonographic exposure apparatus according to any one of claims 1 to 4 characterized in that the generator comprises a plurality of spaced apart ultrasound transducers positioned and spaced from said ultrasonographic element.

6. An ultrasonographic exposure apparatus according to any one of claims 1 to 5 wherein said supporting means includes means for transporting said ultrasonographic element into and out of position for ultrasonographic exposure.

7. An ultrasonographic exposure apparatus according to any one of claims 1 to 6 additionally including an ultrasonic mirror for reflecting ultrasound received from said ultrasound generator to said ultrasound reception unit.

8. An ultrasonographic exposure apparatus according to claim 6 wherein at least a portion of said damper is light-transmissive.

9. An ultrasonographic exposure apparatus according to any one of claims 3 to 8 characterized by the fact that the first and second transport liquids comprise water.

10. An ultrasonographic exposure apparatus according to any one of claims 4 to 9 characterized in that the electromagnetic radiation is visible light.

FIG. I

FIG. 2